(19) Europäisches Patentamt
European Patent Office
Office européen des brevets

(11) Publication number: **0 104 560**
**B1**

(12) # EUROPEAN PATENT SPECIFICATION

(45) Date of publication of patent specification: **12.08.87**

(51) Int. Cl.$^4$: **C 08 G 75/02**, C 08 J 3/12

(21) Application number: **83109197.0**

(22) Date of filing: **16.09.83**

(54) **Granular poly(arylene sulfide) recovery using evaporation.**

(30) Priority: **27.09.82 US 423592**

(43) Date of publication of application:
**04.04.84 Bulletin 84/14**

(45) Publication of the grant of the patent:
**12.08.87 Bulletin 87/33**

(84) Designated Contracting States:
**AT BE CH DE FR GB IT LI LU NL SE**

(56) References cited:
**US-A-3 478 000**
**US-A-3 707 528**
**US-A-3 800 845**

(73) Proprietor: **PHILLIPS PETROLEUM COMPANY**
**5th and Keeler**
**Bartlesville Oklahoma 74004 (US)**

(72) Inventor: **Stark, Fred Theodore**
**227 S.E.Staats Dr.**
**Bartlesville, OK 74003 (US)**
Inventor: **Nesheiwat, Afif Michael**
**1100 S.E.Madison Blvd.**
**Bartlesville, OK 74003 (US)**
Inventor: **Senatore, Guy**
**5221 S.E.Nowata Rd.**
**Bartlesville, OK 74003 (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to processes for the recovery of poly(arylene sulfide) from a poly(arylene sulfide) reaction mixture. In one of its aspects, the invention relates to the separation of solid and liquid components of the reaction mixture of the reaction of polyhalo-substituted aromatic compounds and polar organic solvent to provide poly(arylene sulfide). In another of its aspects, this invention relates to the recovery of particulate poly(arylene sulfide) by separation from the other components of this reaction mixture. In still another aspect of the invention, it relates to vacuum evaporation processes.

In one concept of this invention it provides a method for separating the reaction mixture of the reaction of polyhalo-substituted aromatic compounds and polar organic solvent into a particulate poly(arylene sulfide) that is recovered from the reaction mixture and other components that can be separated for recovery or disposal.

A basic process for the production of arylene sulfide polymers from polyhalo-substituted cyclic compounds containing unsaturation between adjacent ring atoms, wherein the halogen atoms attached to ring carbon atoms react with an alkali metal sulfide in a polar organic compound at an elevated temperature is disclosed in U.S. Patent 3,354,129. Since the disclosure of that invention a great amount of experimental work has been completed which resulted in the disclosure of methods for both batch and continuous operations to produce poly(arylene sulfides) not only from p-dihalobenzenes but also containing polyhalo aromatic compounds having more than two halogen substituents per molecule and with the addition of various polymerization modifying compounds such as alkali metal carboxylates. Processes have also been disclosed in which various reactants can be premixed to form reaction complexes before all of the reactants are brought together at polymerization conditions. All of these processes have in common the production at a temperature above that at which poly(arylene sulfide) is in molten phase, of a reaction mixture containing poly(arylene sulfide) and a polar organic solvent along with various impurities and unreacted reactants from which solid poly(arylene sulfide) is recovered. The process of the present invention is also adaptable for recovery of granular poly(arylene sulfide) from any slurry which contains granular poly(arylene sulfide) with polar organic solvent, alkali metal halide, poly(arylene sulfide) oligomers, unreacted reactants from the polymerization process and water.

US Patent 3 478 000 describes the recovery of poly(arylene sulfide). This process employs the evaporation of the organic polar diluent fromm a slurry followed by a filtering or centrifuging operation.

US Patent 3 707 528 describes the recovery of poly(arylene sulfide) reaction constituents. In this process the reaction slurries are subjected to atmospheric adiabatic evaporation followed by washing.

US Patent 3 800 845 describes the solvent removal from poly(arylene sulfide) reaction slurries. In this process isothermo evaporation and evaporating essentially all of water followed by adiabatic flashing is described for this recovery operation.

It is an object of this invention to provide a method for recovering the granular poly(arylene sulfide) particles from a slurry comprising granular poly(arylene sulfide), polar organic solvent, alkali metal halide, particularly sodium chloride, poly(arylene sulfide) oligomers, unreacted reactants and water. Another object of this invention is to provide a method for recovering relatively large, granular poly(arylene sulfide) particles from a reaction mixture containing poly(arylene sulfide) and polar organic solvent. It is another object of this invention to provide a method for recovering poly(arylene sulfide) having a particle size distribution resulting in improved filterability and reduced dustiness as compared to the resin recovered by solvent flashing methods. It is still another object of the invention to provide a method for recovering poly(arylene sulfide) having a particle size distribution that will eliminate the need for special treatments or handling of the recovered particles prior to their subsequent uses. It is still another object of the invention to produce poly(arylene sulfide) having a generally higher bulk density than is produced by solvent flashing methods of recovering the polymer from its reaction mixture. It is still another object of this invention to provide a method for recovery of poly(arylene sulfide) which facilitates separation of arylene sulfide oligomers from the reaction mixture. It is another object of this invention to produce useful manufactured articles from poly(arylene sulfide) recovered by the method of this invention. It is still another object of this invention to provide a method for recovery of poly(arylene sulfide) which results in particulate polymer suitable for further treatment and the production of manufactured articles such as films, sheets, fibers, molded articles, and extruded articles.

Other aspects, concepts, and objects of this invention will become apparent to those reading this disclosure and studying the appended drawings and claims.

Statement of the Invention

In accordance with this invention, a method is provided in a process for recovery of granular poly(arylene sulfide) as it is defined in claim 1. In particular, the method for recovery of poly(arylene sulfide) from a slurry is provided the slurry comprising granular poly(arylene sulfide), polar organic solvent, alkali metal halide, poly(arylene sulfide) oligomers, unreacted reactants and water in which the slurry is heated under pressure conditions sufficient to evaporate polar organic solvent, water and volatile impurities such as unreacted reactants at a temperature below the normal boiling point of the polar organic solvent to produce a dry mixture containing poly(arylene sulfide), poly(arylene sulfide) oligomers, and alkali metal halide, particularly NaCl, with a subsequent reslurrying of the dry mixture with water to extract

alkali metal halide, particularly NaCl, and other soluble impurities and disperse poly(arylene sulfide) oligomers. The reslurried mixture is then classified, as by being filtered through a screen, thereby recovering granular poly(arylene sulfide) thereon and passing a filtrate comprising poly(arylene sulfide) oligoimers and aqueous alkali metal halide solutions therethrough. Further embodiments of the invention are defined in the dependent claims.

In particular embodiments of the invention the conditions for evaporating polar solvents can entail heating under vacuum conditions or heating at atmospheric or greater pressure using an inert gas to provide a controlled total pressure as the volatile components are evaporated.

In further embodiments of the invention the filtrate can be filtered through a filter, in particular a vacuum filter, coated with filter aid thereby recovering (arylene sulfide) oligomers thereon and passing therethrough a second filtrate that is principally aqueous alkali metal halide solution.

It is also within the scope of this invention further to treat the reslurried mixture containing aqueous alkali metal halide solution and dispersed poly(arylene sulfide) oligomers by allowing the granular poly(arylene sulfide) to settle and removing at least a portion of the liquid containing aqueous alkali metal halide solution and dispersed poly(arylene sulfide) oligomers before carrying out the filtering process.

It is also within the scope of this invention that the reslurried mixture containing granular poly(arylene sulfide), aqueous alkali metal halide solution and dispersed poly(arylene sulfide) oligomers be subjected to multiple processes of filtering and reslurrying of the filter cake thereby further separating undesirable contaminants from the particulate poly(arylene sulfide) before drying the particulate polymer and subjecting it to further processing to produce articles such as films, fibers, molded objects, and extruded articles.

The process of the present invention is suitable for the recovery of poly(arylene sulfide) produced by any method that results in a slurry comprising granular poly(arylene sulfide), polar organic solvent, alkali metal halide, particularly NaCl, poly(arylene sulfide) oligomers, unreacted reactants and water as the major identifiable components of the mixture. The process of the present invention is particularly suitable for use in recovering poly(arylene sulfide).

In accordance with further embodiments of the invention the reaction mixture, after the production of the slurry of particulate poly(arylene sulfide) in polar organic solvent, is subjected to further treatments to separate and recover arylene sulfide polymer particles and to separate and recover or dispose of the other components of the reaction mixture.

The process of the present invention is suitable for use in recovering poly(arylene sulfide) produced by any method that results in a reaction mixture containing a molten poly(arylene sulfide), polar organic solvent, various impurities, and unreacted reactants. The most common of impurities will be by-product alkali metal halide-principally sodium chloride (NaCl)-and poly(arylene sulfide) oligomers which are gelatinous materials commonly described as "slime" because of their physical properties. Processes that will produce such a reaction mixture are set forth in U.S. Patent 3,354,129 and its derivatives in which polyhalo-substituted aromatic compounds are reacted with sulfur-containing reactants in a polar organic solvent, optionally with polymerization modifying compounds, either in batch or continuous operations. Reaction mixtures that can be treated by the process of this invention also include those in which components of the reaction mixture are premixed to form complexes before all of the components are brought together under polymerization conditions.

Although other components are not excluded from the reaction mixture, in general, arylene sulfide polymers treated by the process of this invention are phenylene sulfide polymers produced by the contacting of at least one p-dihalobenzene, under polymerization conditions for a period of time sufficient to form a phenylene sulfide polymer, with a mixture in which at least one alkali metal sulfide or other sulfur source and a polar organic solvent, often with the addition of such optional components as a minor amount of a polyhalo aromatic compound having more than two halogen substituents per molecule, and/or a polymerization modifying compound such as an alkali metal carboxylate or a lithium halide. Some of the more common components of these reaction mixtures are listed below:

p-Dihalobenzenes which can be employed by the process of this invention can be presented by the formula

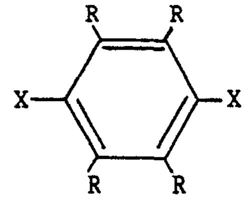

where each X is selected from the group consisting of chlorine, bromine, and iodine, and each R is selected from the group consisting of hydrogen and hydrocarbyl in which the hydrocarbyl can be an alkyl, cycloalkyl, or aryl radical or combination thereof such as alkaryl, aralkyl, the total number of carbon atoms in each molecule being within the range of 6 to about 24, with the proviso that in at least 50 mole percent of

the p-dihalobenzene employed each R must be hydrogen.

Examples of some p-dihalobenzenes which can be employed in the process of this invention include p-dichlorobenzene, p-dibromobenzene, p-diiodobenzene, 1-chloro-4-bromobenzene, 1-chloro-4-bromobenzene, 1-chloro-4-iodobenzene, 1-bromo-4-iodobenzene, 2,5-dichlorotoluene, 2,5-dichloro-p-xylene, 1-ethyl-4-isopropyl-2,5-dibromobenzene, 1,2,4,5-tetramethyl-3,6-dichlorobenzene, 1-butyl-4-cyclohexyl-2,5-dibromobenzene, 1-hexyl-3-dodecyl-2,5-dichlorobenzene, 1-octadecyl-2,5-diidobenzene, 1-phenyl-2-chloro-5-bromobenzene, 1-(p-tolyl)-2,5-dibromobenzene, 1-benzyl-2,5-dichlorobenzene, 1-octyl-4-(3-methylcyclopentyl)-2,5-dichlorobenzene, and mixtures thereof.

Polyhalo aromatic compounds having more than two halogen substituents per molecule which can be employed in the process of this invention can be represented by the formula $R'X'_n$, where each X' is selected from the group consisting of chlorine and bromine, preferably chlorine, n is an integer of 3 to 6, and R' is a polyvalent aromatic radical of valence n which can have up to about 4 methyl substituents, the total number of carbon atoms in R' being within the range of 6 to about 16.

Examples of some polyhalo aromatic compounds having more than two halogen substituents per molecule which can be employed in the process of this invention include 1,2,3-trichlorobenzene, 1,2,4-trichlorobenzene, 1,3-dichloro-5-bromobenzene, 2,4,6-trichlorotoluene, 1,2,3,5-tetrabromobenzene, hexachlorobenzene, 1,3,5-trichloro-2,4,6-trimethylbenzene, 2,2',4,4'-tetrachlorobiphenyl, 2,2',6,6'-tetrabromo-3,3,5'-tetramethylbiphenyl, 1,2,3,4-tetrachloronaphthalene, 1,2,4-tribromo-6-methylnaphthalene, and mixtures thereof.

Alkali metal sulfides which can be employed in the process of this invention include lithium sulfide, sodium sulfide, potassium sulfide, rubidium sulfide, cesium sulfide, and mixtures thereof. Preferably, the alkali metal sulfide is used as a hydrate or as an aqueous mixture. If desired, the alkali metal sulfide can be prepared as an aqueous solution by the reaction of an alkali metal hydroxide with an alkali metal bisulfide in aqueous solution.

Alkali metal carboxylates which can be employed in the process of this invention can be represented by the formula $R''CO_2M$, where R'' is a hydrocarbyl radical selected from alkyl, cycloalkyl, and aryl, and combinations thereof such as alkaryl, aralkyl, the number of carbon atoms in said R'' being within the range of 1 to about 20, and M is an alkali metal selected from lithium, sodium, potassium, rubidium and caesium. If desired, the alkali metal carboxylate can be employed as a hydrate or as a solution or dispersion in water.

Examples of some alkali metal carboxylates which can be employed in the process of this invention include lithium acetate, sodium acetate, potassium acetate, lithium propionate, sodium propionate, lithium 2-methylpropionate, rubidium butyrate, lithium valerate, sodium valerate, cesium hexanoate, lithium heptanoate, lithium 2-methyloctanoate, potassium dodecanoate, rubidium-4-ethyltetradecanoate, sodium octanoate, sodium heneicosanoate, lithium cyclohexanecarboxylate, sodium 3-methyl-cyclopentanecarboxylate, potassium cyclohexylacetate, potassium benzoate, lithium benzoate, sodium benzoate, potassium m-toluate, lithium phenylacetate, sodium 4-phenylcyclohexanecarboxylate, potassium p-tolylacetate, lithium-4-ethylcyclohexylacetate, and mixtures thereof.

The amount of alkali metal carboxylate generally used as a polymerization modifier in the polymerization reaction — usually about .05 to about 4, preferably about .1 to about 2 gram-moles carboxylate/gram-mole of p-dihalobenzene — will serve to reduce the amount of separating agent needed in this invention.

Lithium halides which can be employed in the process of this invention include lithium chloride, lithium bromide, lithium iodide, and mixtures thereof.

Alkali metal hydroxides which can be employed in the process of this invention include lithium hydroxide, sodium hydroxide, potassium hydroxide, rubidium hydroxide, cesium hydroxide, and mixtures thereof.

The polar organic solvents useful in the present invention are solvents for the polyhalo aromatic compounds and the alkali metal sulfides used in the production of arylene sulfide polymers. Examples of such polar organic solvents include amides, including lactams, and sulfones. Specific examples of such polar organic solvents include hexamethylphosphoramide, tetramethylurea, N,N'-ethylenedipyrrolidone, N-methyl-2-pyrrolidone (NMP), pyrrolidone, caprolactam, N-ethylcaprolactam, sulfolane, N,N'-dimethylacxetamide, low molecular weight polyamides. The polar organic solvent presently preferred is N-methyl-2-pyrrolidone (NMP).

Water is the preferred agent for causing separation of molten poly(arylene sulfide) from the polar organic solvent; however, any liquid can be used (1) that is soluble in the polar organic solvent used in the reaction mixture; (2) that is not itself a solvent for poly(arylene sulfide) and (3) that has boiling characteristics suitable for the reaction and recovery conditions of this process. In general, paraffinic hydrocarbons, higher boiling alcohols, and higher boiling ethers are suitable compounds for use alone or in admixture.

Although the reaction temperature at which the polymerization is conducted can vary over a wide range, generally it will be within the range of about 215.6°C (420°F) to about 315.6°C (600°F), preferably about 223.9°C (435°F) to about 283°C (540°F). The reaction time can vary widely, depending in part on the reaction temperature, but generally will be within the range of about 10 minutes to about 72 hours, preferably about 1 hour to about 8 hours. The pressure should be sufficient to maintain the N-methyl-2-pyrrolidone, the p-dihalobenzene, and the polyhalo aromatic compound having more than two halogen substituents per molecule, if used, substantially in the liquid phase.

Polymerization of various components set out above can with other components well known in the art result in a reaction mixture at a temperature above that at which poly(arylene sulfide) is in molten phase comprising poly(arylene sulfide), polar organic diluent, arylene sulfide oligomers ("slime"), sodium chloride, and unreacted reactants as the major components of the reaction mixture. For commercial purposes, currently most usually, the poly(arylene sulfide) would be poly(phenylene sulfide) (PPS) and the polar organic solvent would be N-methyl-2-pyrrolidone (NMP). A method has recently been provided for converting the molten poly(arylene sulfide) into relatively large, coarse, particulate poly(arylene sulfide) that is readily separable from the other components of the reaction mixture. In this method the temperature of the polymerization reaction mixture is reduced sufficiently to produce a slurry comprising particulate poly(arylene sulfide) and polar organic solvent while the reaction mixture is in the presence of an amount of a separation agent, i.e., a liquid soluble in the polar organic solvent but not itself a solvent for poly(arylene sulfide), preferably water, sufficient to cause a phase separation of molten poly(arylene sulfide) for the polar organic solvent. In the preparation of poly(arylene sulfide) using alkali metal carboxylate sufficient separation agent can be present in the reaction mixture to cause a phase separation between molten poly(arylene sulfide) and polar organic solvent, but the addition of separation agent, preferably deionized water, to this mixture can enhance the separation. When alkali metal carboxylate is present, a lesser amount of separation agent is necessary to cause phase separation. After the phase separation has been accomplished, the temperature of the separated phases is lowered from the range in which the poly(arylene sulfide) is molten into the range in which it solidifies, i.e., from about 260—316°C (500 to 600°F) to a temperature below 177°C (350°F), generally within the range of about 148.9°—177°C (300 to 350°F). Relatively large, coarse particles of about .04 to about 4 mm are formed which is in contrast to the fine powder produced by other known methods of recovery of the polymer.

The process of the present invention is a currently preferred method for separation of particulate poly(arylene sulfide) from its reaction mixture slurry particularly as produced by the method described above, but also from any other method of production that would yield a similar mixture.

To illustrate the operation of the present invention a preferred operation in a continuous process will be described below in conjunction with a drawing which is a schematic representation of a process for separating particulate poly(phenylene sulfide) (PPS) from its reaction mixture slurry.

Referring now to the drawing, suitable reactants are introduced through line 1 into reaction vessel 3 under conditions suitable to produce a slurry of coarse particulate poly(phenylene sulfide) (PPS) in a reaction mixture which also contains polar organic solvent, NaCl, poly(phenylene sulfide) oligomers, unreacted reactants and water. The process of preparing such a mixture does not form a part of this invention; but, typically, can be carried out as follows:

Aqueous solutions of NaOH and NaHS are fed into the reaction vessel 3 for neutralization to yield primarily a dissolved $Na_2S$. N-methyl-2-pyrrolidone (NMP) is then fed into the vessel to flush all the material from the lines into vessel 3 which serves as a dehydration and polymerization reactor. The feed line into the stirred vessel is then flushed with nitrogen gas which is vented through the vessel and line 5. Additional NMP and sodium acetate are charged through line 1 into dehydration/polymerization vessel 3 to provide a mixture of water, NMP, sodium sulfide and sodium acetate in the vessel. Optionally, the sodium acetate can be replaced by charging NaOH and acetic acid into the dehydration/polymerization vessel 3 so that the sodium acetate is prepared in situ. The mixture of water, NMP, sodium sulfide and sodium acetate is heated by means of heat transfer coils (not shown) containing hot oil. Rising vapors are passed through line 5 for fractionation in a distillation column (not shown). After the dehydration process, p-dichlorobenzene (DCB) is added to vessel 3 through line 1, and, optionally, 1,2,4-trichlorobenzene (TCB) is added to reactor 3 through line 1. The mixture is heated under polymerization conditions to form a reaction mixture containing a molten PPS resin, unreacted reactants, phenylene sulfide oligomers ("slime") and sodium chloride dissolved in NMP and water.

Since sodium acetate and water are present in the reaction mixture a small amount of deionized water can, optionally, be charged to the polymerization vessel 3 through line 1 on completion of the polymerization to facilitate the separation of the molten PPS phase from the second liquid phase comprising NMP, phenylene sulfide oligomers, sodium chloride and the unreacted reactants. If sodium acetate is not used in the reaction or an anhydrous reaction mixture or reaction mixture containing relatively little water results from the reaction, a sufficient amount of deionized water can be added through line 1 to cause separation of the molten PPS from the second liquid phase. During the phase separation the reaction mixture is vigorously stirred by agitator 7 and the temperature of the reactor is reduced so that after the separation the liquid PPS phase gradually solidifies as its temperature drops below the transition temperature. There is produced a slurry of coarse particulate PPS in the reaction mixture.

This mixture, according to the present invention, is then transferred through line 9 to an evaporator 11 which is heated indirectly by heat exchange material transferred into the vessel through line 13 and removed from the vessel after heat exchange through line 15. The temperature is maintained under suitable conditions to evaporate NMP, water and volatile impurities which are removed through line 17, passed through condenser 19 and line 21 into condensate collection tank 23 from which the condensed water, NMP and other condensed materials can be removed through line 25 for further purification. Other

non-condensed vapors are removed from condensate tank 23 through line 27.

When the evaporator 11 is maintained at vacuum conditions during the evaporation process, the effluent gases, which have been evaporated at a temperature below the normal boiling point of the polar organic solvent (i.e., the boiling point of the solvent at 760 mm Hg, which for NMP is 202.2°C (396°F), are handled as described directly above. When the evaporator 11 is maintained at atmospheric or greater pressure, an inert gas, e.g., nitrogen, is introduced through line 10 to maintain a controlled pressure as the volatile components are evaporated at a temperature below the normal boiling point of the polar organic solvent. The inert gas is ultimately removed with the other non-condensibles through line 27. The inert gas can be separated and recycled through line 10.

The use of the bag filter 12 is particularly appropriate when an inert gas is added to the evaporator 11. The bag filter 12 can be used with the vacuum process.

Solid effluent from evaporator 11 is a dry mixture which contains PPS, PPS oligomers, and NaCl is transferred through line 29 into reslurrying tank 31. Water, preferably, deionized water, is supplied through line 33 into the reslurrying tank 31 where with agitation supplied by agitator 35 a reslurried mixture which contains coarse particulate PPS, dispersed PPS oligomers, and an aqueous NaCl solution, is prepared.

Optionally, this reslurried mixture can be passed through line 37, valve 39 and line 41 to a decantation tank 43 in which coarse polymer is allowed to separate or settle in the liquid phase and at least a portion of the aqueous NaCl solution with dispersed PPS oligomers is decanted through line 45 for disposal or for further treatment. The coarse PPS particles are passed through line 47, valve 49 and line 51 to be screened.

If the decantation step is not used, coarse PPS particles from reslurry tank 31 are passed through line 37, valve 53 and line 51, to porous metal screen 55 where aqueous NaCl solution and PPS oligomers ("slime") along with wash water supplied through line 57 pass through the screen as filtrate while the coarse PPS polymer is collected on the screen and removed through line 59 as product. Optionally, the material in line 59 can be passed through multiple operations of reslurrying and screening before being passed to a product drying operation (not shown).

Filtrate from the screen 55 is passed through line 61 as, optionally, would be the decanted aqueous NaCl solution with dispersed "slime" from the decanting tank 43 into a vacuum drum filter 63 precoated with a suitable filter aid such as diatomaceous earth of cellulose fibers. Dispersed "slime" is retained on the filter coating, which is scraped off at certain time intervals and replaced by a fresh coating. Scraped-off filter aid/"slime" waste material is passed through line 67 to be discarded. While the "de-slimed" aqueous NaCl solution is passed through line 69 for disposal or further treatment.

The following are examples illustrating the process of the present invention. They are to be taken as illustrative and not exclusive.

## Example I

In this example the preparation of poly(arylene sulfide) (PPS) from an aqueous mixture of sodium sulfide, N-methyl-2-pyrrolidone (NMP) and p-dichlorobenzene (DCB), and the subsequent recovery of PPS by conventional solvent flashing is described. The PPS resin prepared by this method will be used as a control polymer for comparative screening tests.

An aqueous sodium sulfide solution was prepared by mixing 32.7 Kg (72.2 lb) of a 50.35 weight percent NaOH solution with 39.7 Kg (87.3 lb) of a solution containing 58.91 weight percent of sodium hydrogen sulfide (NaHS) and 0.62 weight percent of $Na_2S$. This sodium sulfide solution, 10.7 Kg (23.5 lb) of sodium acetate, and 135.1 l (35.7 gallons) of NMP were charged to an agitated pilot plant reactor, which was then purged with nitrogen. This mixture was first heated for about 10 minutes at a temperature of about 170—171.11°C (338—340°F) and a pressure of 117.13 kPa (17 psig) and then dehydrated by gradually raising the temperature to 234.44°C (454°F) at 117.13 kPa (17 psig), during a time interval of about 220 minutes.

Subsequently 59.9 kg (132.1 lb) of DCB were charged to the reactor, and the entire reactor mixture was heated for 2 hours at a temperature of about 234.44°C (454°F), while the pressure rose from 117.13 kPa (17 psig) to 482.3 kPa (70 psig). The reactor temperature was then raised to 510°C, and the pressure increased to 999.1 kPa (145 psig) during a period of 30 minutes. Continued heating of the reactor mixture was carried out at about 510°C and 999.1—1033.5 kPa (145—150 psig) for about 1 hour.

About 379 kPa (55 psig) of $CO_2$ was charged to the reactor, which was maintained at about 266.0°C (511°F) 1412.5 kPa (205 psig) for 30 minutes.

The polymerization mixture was concentrated by partial solvent flashing at about 262.7°C (505°F) while the pressure was reduced from 1412.5 kPa (205 psig) to about 551.2 kPa (80 psig). Finally the partially de-solventized slurry was heated to about 282.2°C (540°F), pressured to about 1088.6 kPa (158 psig), and transferred to a blender, where essentially all liquids were evaporated at 276.7—284.4°C (530—544°F) during a time interval of about 30 minutes.

The dry, salt-filled PPS was first washed with about 302.8 l (80 gallons) of cold deionized water and then twice with about the same amount of hot deionized water at approximately 176.7°C/1033.5 kPa (350°F/(150 psig). After filtration, the PPS filter cake was dried at 93.3—148.9°C (200—300°F) and atmospheric pressure conditions for about 3 hours. Dry PPS polymer obtained in 30 polymerization runs carried out at essentially the same conditions as described above were blended and used for various tests. The blend of this control polymer is labeled Run 1.

## Example II

In this example the preparation of poly(phenylene sulfide) (PPS) with sodium acetate as molecular weight modifier and the subsequent precipitation of coarse, granular PPS in the presence of water is described.

An aqueous sodium sulfide solution was prepared by mixing 32.7 Kg (72.0 lb) of a 50.75 weight percent NaOH solution with 39.8 Kg (87.8 lb) of a solution containing 58.75 weight percent of NaHS and 0.36 weight percent of $Na_2S$. This solution was charged to a stirred pilot plant reactor containing 10.7 Kg (23.5 lb) of sodium acetate and 104.9 l (27.7 gallons) of N-methyl-2-pyrrolidone (NMP) under a nitrogen atmosphere, followed by flushing with 30.3 l (8.0 gallons) of NMP. The entire mixture was first heated without evaporation for 17 minutes at a temperature of about 167.8—170°C (334—338°F) and a pressure of about 117.1 kPa (17 psig) and was then dehydrated by gradually raising the temperature to a final temperature of about 235.6°C (458°F), during a time period of about 100 minutes, at an essentially constant pressure of 117.1 kPa (17 psig).

Subsequently 60.4 kPa (133.4 lb) of p-dichlorobenzene (DCB) were charged to the reactor, and the entire mixture was heated for 2 hours at a temperature ranging from 228°C (443°F) (initial) to 232.2°C (450°F) at a pressure ranging from 206.7 kPa (30 psig) (initial) to 463.5 kPa (68 psig). The reactor temperature was then raised to about 264.4—265.6°C (508—510°C), and the pressure was increased to about 930·2—1006.0 kPa (135—146 psig) during a period of 30 minutes. Heating at these conditions was carried out for 3 hours to complete the polymerization reaction.

Thereafter the reactor temperature was lowered to about 121.1°C (250°F) and the pressure was reduced to 82.7 kPa (12 psig) during a 2 hour time interval. This operation, which was carried out under stirring at a rotor speed of about 350—400 r.p.m., resulted in a separation of the reaction mixture into two phases: a PPS phase and an NMP phase containing essentially all impurities. Finally 37.9 l (10 gallons) of NMP were added, and the temperature was allowed to further drop to about 71.1°C (160°F) with essentially no further change in pressure.

## Example III

This example describes the evaporation of volatiles from a nitrogen-purged reactor slurry of Example II under vacuum conditions. About 4.1—4.8 Kg of said reactor slurry containing granular PPS, poly(phenylene sulfide) oligomer ("slime"), NMP, water, unreacted reactants and sodium chloride by-product were placed in a nitrogen-purged 2-gallon stainless steel reactor. The slurry was heated while being stirred at a speed of about 250 r.p.m. Some water started evaporating at about 243°F (117°C) under atmospheric pressure conditions. The bulk of the liquid was evaporated after the pressure was reduced from about 1010.8 mbar (760 torr) to about 6.65 mbar (5 torr), within about 3 hours, at about 350°F (177°C) while a nitrogen stream was passed through the slurry. About 3.3—3.5 liters of liquids (mainly NMP and water) were collected in a cooled overhead accumulator.

After allowing the reactor content to cool overnight under a nitrogen atmosphere, about 3.8 l (1 gallon) of deionized water was added to the dry polymer/salt mixture. The reactor content was stirred for about 30 minutes without heating. The slurry was filtered, and the polymer filter cake plus 3.8 l (1 gallon) of de-ionized water were added back to the reactor. The resulting slurry was stirred, heated to about 177°C (350°F) within approximately 45—60 minutes, and filtered after cooling. The above-described washing step with hot deionized water was repeated once. The washed PPS was dried in a forced-air oven at 121.1°C (250°F).

Five PPS samples treated as described above were blended and used for screening and spinning tests. This PPS blend is labeled Run 2.

## Example IV

In this example the particle size distribution of PPS resin recovered by conventional solvent flashing (Run 1, Example I) and by precipitation in the presence of water and sodium acetate and subsequent vacuum evaporation (Run 2, Example III) are compared.

Screening analyses were carried out as follows:

PPS resin was washed with water and acetone and dried in an oven at 121.1°C (250°F). Dried PPS resin was first blended in a 18.9 l (5-gallon) drum tumbler for 30 minutes. A sample of about 200 grams was placed in a drying oven at 93.3°C (200°F) and dried for about 30 minutes until no more moisture loss occurred. A small amount of carbon black (100—200 mg) was added as an antistatic agent to the PPS sample, which was then shaken manually in a jar.

The dried PPS sample was poured onto the top screen of an electric Cenco-Meinzer® sieve shaker (catalog number 18480) and shaken at speed setting "5" (650 cycles per minute) for 30 minutes. After weighing the amount on each screen, the shaking operation was repeated for 10—15 minutes until no more weight change occurred. The sieve battery was tapped with a wooden object before each weighing to loosen particles that clung to the screen. Screening data are listed in Table 1.

TABLE I

| | Run 1 (Control) | Run 2[a] (Invention) |
|---|---|---|
| % greater than 1.20 mm | 5.3 | 12.6 |
| % greater than 0.85 mm | 19.4 | 39.4 |
| % greater than 0.60 mm | 32.1 | 66.0 |
| % greater than 0.30 mm | 66.7 | 91.0 |
| % greater than 0.15 mm | 78.3 | 96.7 |

[a)]average of 12 screening analyses.

Data in Table I clearly show that the PPS resin of Run 2 recovered by the vacuum evaporation process of this invention is considerably coarser, and thus more easily filterable and less dusty, than the PPS resin of Run 1 recovered by conventional solvent flashing.

Example V

In this example the PPS was recovered by vacuum evaporation from the slurry of Example II with a nitrogen purge as described in Example III, except that prior to the filtration of the slurry of dried PPS polymer and cold water the aqueous solution was decanted to remove a major portion of "slime" (PPS oligomer). Samples obtained from five evaporation runs according to the above-described procedure were blended. This blend is labeled Run 3.

Example VI

In this example the evaporation of volatiles from the reactor slurry of Example II was carried out under vacuum conditions in accordance with the procedure of Example III, except that the slurry was purged with air instead of nitrogen. Dried PPS samples of four vacuum evaporation runs with air purge were blended. This blend is labeled Run 4.

Example VII

In this example the evaporation of volatiles from the reactor slurry of Example II was carried out under vacuum conditions with air purge as described in Example VI, except that the final temperature during the vacuum evaporation was 280°F (138°C) and that prior to the filtration of the slurry of dried PPS and cold water the aqueous phase was decanted to remove a major portion of "slime" (see Example V). Samples from two evaporation runs at 138°C (280°F) with air purge were blended. This blend is labeled Run 5.

Example VIII

In this example the extrusion of fibers from PPS resin recovered by precipitation in the presence of water and subsequent vacuum drying is described. The granular PPS resin was dried under vacuum conditions of about 110°C for about 15 hours and then spun into fibers without prior pelletizing. The water-cooled polymer feed was extruded in a 1" Wayne Machine and Die Co. extruder through 60/100/200/Dynalloy® XIIL/60 mesh pack screens and a spinneret having 34 holes of 0.122 cm (0.048") length and 0.030 cm (0.012") diameter, at a rate of about 4.4 $g/cm^2/minute$. A 15 weight% solution of Nopcostat® 2152—P, marketed by the Process Chemicals Division of Diamond Shamrock Corporation, Morristown, N.J., was used as the finish on the spun PPS yarn. The extruded strand of 34 yellow PPS filaments was drawn over a hot plate of 100°C to a final draw ratio of 4.0—4.2.

Example IX

Properties of washed granular PPS resin recovered by vacuum evaporation and fiber strands produced therefrom in accordance with the procedure described in Example VIII are summarized in Table II.

TABLE II

| | Run 2 (Example III) | Run 3 (Example V) | Run 4 (Example VI) | Run 5 (Example VII) |
|---|---|---|---|---|
| Flow Rate[a)], g/10 min | 523 | 322 | 351 | 323 |
| Ash, weight% | 0.54 | 0.39 | 0.38 | 0.42 |
| Insolubles[b)], ppm | 370 | 72 | — | 43 |
| Tmc[c)], °C | 191 | 193 | 212 | 184 |
| Denier[d)] | 216 | 223 | 228 | 228 |
| Tenacity[e)], gpd | 2.7 | 3.7 | 3.2 | 3.9 |
| Elongation[e)], % | 20 | 20 | 22 | 18 |
| Initial Modulus, gpd | 41 | 42 | 42 | 49 |
| Spinnability, minutes to break | 60 | >60 | 2 | >60 |

a) determined at 316°C according to a modified ASTM D1238 method employing an orifice of 0.210 cm (0.0825") diameter and 0.800 cm (0.315") length and an effective weight of 5.0 Kg (including the weight of the piston)
b) not soluble in α-chloronaphthalene; 40 grams of PPS were heated with about 1000 cc of α-chloronaphthalene at about 240°C for approximately 2 hours;
c) determined with a Perkin Elmer® DSC—2C differential scanning calorimeter; cooling of the polymer melt started at 360°C; rate of cooling was 20°C/minute;
d) weight in grams of 9000 meters of the yarn;
e) determined with an Instron 1122 tensile tester; the yarn was stretched at a rate of about 200 mm/min.

Data in Table II show:
1) removal of "slime" prior to filtration of the slurry of PPS and cold water (Run 3 vs. Run 2) resulted in lower ash content, lower insolubles content, higher yarn tenacity and better spinnability (fewer breaks);
2) vacuum evaporation in the presence of nitrogen in lieu of air (Run 2 vs. Run 4) resulted in considerably better spinnability (fewer breaks);
3) lowering the temperature during evaporation and "slime" removal prior to the cold water/PPS slurry filtration (Run 5 vs. Run 4) resulted in higher yarn tenacity and considerably better spinnability (fewer breaks). Run 5 is presently considered the preferred mode of operation.

Example X

In this example the extrusion of a film from granular PPS resin recovered by the vacuum evaporation process of this invention is described. About 2.7 Kg (6 lb) of granular resin were dried in a Blue-M oven at 177°C (350°F) for about 5 hours and extruded in a 3.81 cm (1½") Davis-Standard extruder at a die temperature of about 315°C (599°F) into strands, which were then cut into pellets.

These pellets were vacuum-dried at about 110°C (230°F) overnight and were then extruded in a Kenney Sheet Line® extruder at a melt temperature of about 337.8°C (640°F) through a 15.2 cm (6") wide die having a 0.063 cm (0.025") die gap. The extruded film was passed over rolls having a temperature of about 46.7°C (116°F) and was stretched to a thickness of about 0.064 cm (0.015") by a takeup roll at a speed of about 100 rpm. The produced film had good appearance and contained very few bubbles.

Example XI

This calculated example illustrates the operation of removing volatiles from a commercial PPS reactor slurry at non-vacuum conditions. A plant-size batch comprising about 3035.1 Kg (6700 pounds) of PPS (including 5—8 weight percent "slime"), about 3261.6 Kg (7200 pounds) of NaCl, about 6342 Kg (14,000 pounds) of NMP plus about 1585.5 Kg (3500 pounds) of $H_2O$, and having a temperature of about 250°F (121°C) is evaporated to dryness in an agitated dryer at a temperature of about 248°F (120° C) and a total pressure of about 800 mm Hg. A heat input of about $5.7 \times 10^3$ Joules/hr ($5.4 \times 10^6$ BTU/hour) is required to accomplish the evaporation process in about 3—5 hours.

At the beginning of the evaporation process, the sum of the vapor pressures of NMP and $H_2O$ is sufficient to provide a total operating pressure of 8000 mm Hg, at an essentially constant temperature of about 120°C (248°F). As the evaporation progresses and the amount of the more volatile component ($H_2O$)

in the liquid phase decreases, the total vapor pressure drops, and increasing amounts of an inert gas, preferably nitrogen, have to be introduced into the dryer to provide a controlled total pressure of about 800 mm Hg (106.8 kPa (15.5 psi). The progressive changes in the composition of the liquid and vapor phases are demonstrated by calculated data summarized in Table III.

TABLE III

Mole Fractions

| In Liquid Phase | | In Vapor Phase | | |
|---|---|---|---|---|
| NMP | $H_2O$ | NMP | $H_2$ | $N_2$ |
| 0.50 | 0.50 | 0.0375 | 0.9625 | 0.0 |
| 0.55 | 0.45 | 0.041 | 0.866 | 0.093 |
| 0.61 | 0.39 | 0.046 | 0.750 | 0.204 |
| 0.67 | 0.33 | 0.050 | 0.640 | 0.310 |
| 0.735 | 0.265 | 0.055 | 0.510 | 0.435 |
| 0.85 | 0.15 | 0.064 | 0.290 | 0.646 |
| 0.965 | 0.035 | 0.072 | 0.067 | 0.861 |

In order to accelerate the removal of NMP after essentially all water and about 92 percent of NMP have been evaporated, the temperature can be raised to a maximum of about 204.4°C (400°F).

Exiting nitrogen gas passes through a bag filter for retention of solid fines and is cooled to about 37.8—43.3°C (100—110°F) for condensation of NMP and $H_2O$ in a vapor-liquid separator. The solvent-free recycle nitrogen and an appropriate amount of nitrogen feed gas are pumped with a 550 HP blower through a heat exchanger of about $2.6 \times 10^9$ Joules/hr ($2.5 \times 10^6$ BTU/hour) capacity to heat the gases to about 121°C (250°F) before they are introduced into the dryer. Following completion of drying, the salt-filled PPS polymer is cooled and washed in accordance with the procedure illustrated in FIGURE 1.

**Claims**

1. A method for the recovery of granular poly(arylene sulfide), characterized by

(a) treating a polymeric reaction mixture comprising polar organic solvent, molten poly(arylene sulfide), in the presence of an amount of a liquid which is (aa) soluble in the polar organic solvent, but (bb) not itself a solvent for poly(arylene sulfide) said amount being sufficient to cause phase separation of molten poly(arylene sulfide) from polar organic solvent upon reducing the temperature of said reaction mixture sufficiently to produce a slurry of granular poly(arylene sulfide) in polar organic solvent;

(b) reducing the temperature of the reaction mixture after phase separating to produce a reaction mixture slurry comprising granular poly(arylene sulfide), polar organic solvent, arylene sulfide oligomers, alkali metal halide, unreacted reactants and said liquid,

(c) heating said reaction mixture slurry under a pressure to evaporate polar organic solvent, liquid and volatile impurities at a temperature below the normal boiling point of said polar organic solvent, thereby producing a dry mixture comprising poly(arylene sulfide) arylene sulfide oligomers, and alkali metal halide,

(d) reslurrying said dry mixture with water to extract alkali metal halide and disperse arylene sulfide oligomers in a reslurried mixture, and

(e) filtering reslurried mixture thereby retaining granular poly(arylene sulfide) and passing a first filtrate comprising arylene sulfide oligomers and aqueous alkali metal halide solution.

2. The method of claim 1 characterized in that said pressure is between atmospheric pressure and vacuum.

3. The method of claim 1 characterized in that said pressure is at least atmospheric pressure and said pressure is controlled at a near constant level by addition of an inert gas so that said polar organic solvent, water and volatile impurities are evaporated.

4. The method of any of claims 1 to 3 characterized by further comprising (f) filtering said first filtrate through a vacuum filter coated with filter aid thereby recovering arylene sulfide oligomers thereon and passing a second filtrate comprising aqueous alkali metal halide therethrough.

5. The method of any of claims 1 to 4 characterized in that said poly(arylene sulfide) is poly(phenylene sulfide), said polar organic solvent is N-methyl-2-pyrrolidone (NMP), and said alkali metal halide is NaCl.

6. The method of one of the preceding claims characterized in that said liquid in water.

7. The method of any of claims 1 to 3 characterized in that the reslurried mixture of (d) is treated by (1) allowing said granular poly(arylene sulfide) to settle, and (2) removing at least a portion of water containing extracted alkali metal halide and dispersed poly(arylene sulfide) oligomers before screening.

8. The method of claim 1, 3 or 4 characterized in that during the evaporation step (a) a stream of inert gas is passed through said slurry.

9. The method of claim 8 characterized in that the gas is chosen from air and nitrogen.

10. Use of the dried recovered granular poly(arylene sulfide), obtained in any of claims 1 to 9 for making manufactured articles; in particular wherein said articles are selected from films, sheets, fibers, molded objects and extruded articles.

**Patentansprüche**

1. Verfahren zur Gewinnung von körnigem Poly(arylensulfid), dadurch gekennzeichnet, daß man

(a) ein polares organisches Lösemittel, geschmolzenes Poly(arylensulfid) enthaltendes polymeres Reaktionsgemisch in Anwesenheit einer Menge einer Flüssigkeit behandelt, die (aa) in dem polaren organischen Lösemittel löselich ist, jedoch (bb) selbst kein Lösemittel für Poly(arylensulfid) ist, wobei die Menge ausreichend ist, um Phasentrennung des geschmolzenen Poly(arylensulfids) vom polaren organischen Lösemittel zu bewirken, wenn man die Temperatur des Reaktionsgemisches ausreichend absenkt, um eine Aufschlämmung von körnigem Poly(arylensulfid) in polarem organischen Lösemittel zu erzeugen;

(b) die Temperatur des Reaktionsgemisches nach der Phasentrennung absekt, um eine Reaktionsgemisch-Aufschlämmung herzustellen, die körniges Poly(arylensulfid), polares organisches Lösemittel, Arylensulfidoligomere, Alkalimetallhalogenide, nicht umgesetzte Reaktanten und die Flüssigkeit enthält,

(c) die Reaktionsgemisch-Aufschlämmung unter Druck erwärmt, um polares organisches Lösemittel, flüssige und flüchtige Verunreinigungen bei einer Temperatur unterhalb des gewöhnlichen Siedepunktes des polaren organischen Lösemittels zu verdampfen, wodurch man ein trockenes, Poly(arylensulfid), Arylensulfidoligomere und Alkalimetallhalogenide enthaltendes Gemisch erzeugt,

(d) das trockene Gemisch mit Wasser wiederaufschlämmt, um Alkalimetallhalogenide und disperse Arylensulfidoligomere in einem wiederaufgeschlämmten Gemisch zu extrahieren, und

(e) das wideraufgeschlämmte Gemisch filtriert, wodurch man körniges Poly(arylensulfid) zurückhält und ein erstes Filtrat durchläßt, das Arylensulfidoligomere und wässrige Alkalimetallhalogenidlösung enthält.

2. Verfahren nach Anspruch 1, dadurch gekennzeichnet, daß der Druck zwischen Atmosphärendruck und Vakuum liegt.

3. Verfahren nach Anspruch 1, dadurch gekennzeichnet, daß der Druck mindestens Atmosphärendruck ist und daß der Druck auf einem nahezu konstanten Pegel durch Zugabe eines Inertgases geregelt wird, so daß das polare organische Lösemittel, Wasser und flüchtige Verunreinigungen verdampft werden.

4. Verfahren nach einem der Ansprüche 1 bis 3, dadurch gekennzeichnet, daß man weiter (f) das erste Filtrat durch ein mit einer Filterhilfe beschichtetes Vakuumfilter filtriert, wodurch man Arylensulfidoligomere darauf gewinnt und ein zweites, wässriges Alkalimetallhalogenid enthaltendes Filtrat durch es hindurch läßt.

5. Verfahren nach einem der Ansprüche 1 bis 4, dadurch gekennzeichnet, daß das Poly(arylensulfid) Poly(phenylensulfid) ist, das polare organische Lösemittel N-Methyl-2-pyrrolidon (NMP) ist und das Alkanimetallhalogenid NaCl ist.

6. Verfahren nach einem der vorhergehenden Ansprüche, dadurch gekennzeichnet, daß die Flüssigkeit Wasser ist.

7. Verfahren nach einem der Ansprüche 1 bis 3, dadurch gekennzeichnet, daß das wiederaufgeschlämmte Gemisch von (d) dadurch behandelt wird, daß man (1) das körnige Poly(arylensulfid) absetzen läßt, und (2) mindestens einen Teil des Wasser enthaltenden, extrahierten Alkalimetallhalogenides und der dispergierten Poly(arylensulfid)-Oligomere vor dem Filtrieren entfernt.

8. Verfahren nach Anspruch 1, 3 oder 4, dadurch gekennzeichnet, daß man während des Verdampfungsschrittes (a) einen Strom von Inertgas durch die Aufschlämmung leitet.

9. Verfahren nach Anspruch 8, dadurch gekennzeichnet, daß das Gas aus Luft und Stickstoff ausgewählt wird.

10. Verwendung des getrockneten gewonnenen körnigen Poly(arylensulfids), erhalten nach einem der Ansprüche 1 bis 9 zum Herstellen von Gegenständen; insbesondere wobei die Gegenstände aus Filmen, Folien, Fasern, gespritzten Gegenständen und extrudierenden Gegenständen ausgewählt sind.

**Revendications**

1. Procédé de récupération d'un poly(sulfure d'arylène) granulaire, caractérisé en ce que

a) on traite un mélange réactionnel polymère comprenant un solvant organique polaire, un poly(sulfure d'arylène) fondu, en présence d'une quantité d'un liquide qui est (aa) soluble dans un solvant organique polaire, mais (bb) qui n'est pas lui-même un solvant pour le poly(sulfure d'arylène), cette

quantité étant suffisante pour provoquer une séparation de phases du poly(sulfure d'arylène) fondu du solvant organique polaire lorsqu'on abaisse la température de ce mélange réactionnel suffisamment pour produire une bouillie de poly(sulfure d'arylène) granulaire dans le solvant organique polaire;

b) en abaissant la température du mélange réactionel après la séparation de phases pour produire une bouillie de mélange réactionnel comprenant du poly(sulfure d'arylène) granulaire, un solvant organique polaire, des oligomères du sulfure d'arylène, un halogénure de métal alcalin, des réactifs n'ayant pas réagi et ce liquide,

c) en chauffant cette bouillie de mélange réactionnel sous pression pour faire évapor le solvant organique polaire, des impurités liquides et volatiles à une température inférieure au point d'ébullition normal de ce solvant organique polaire, produisant ainsi un mélange sec comprenant du poly(sulfure d'arylène), des oligomères du sulfure d'arylène et un halogénure de métal alcalin.

d) en remettant en bouillie ce mélange sec avec de l'eau pour extraire l'halogénure de métal alcalin et disperser les oligomères de sulfure d'arylène dans un mélange remis sous forme de bouille, et

e) en filtrant le mélange remis en bouillie, retenant ainsi le poly(sulfure d'arylène) granulaire, et en laissant passer un premier filtrat comprenant des oligomères du sulfure d'arylène et une solution aqueuse d'un halogénure de métal alcalin.

2. Procédé de la Revendication 1, caractérisé en ce que cette pression est entre la pression atmosphérique et le vide.

3. Procédé de la Revendication 1, caractérisé en ce que cette pression est au moins la pression atmosphérique et en ce que cette pression est réglée à un niveau pratiquement constant par addition d'un gaz inerte, de telle sorte que ce solvant organique polaire, cette eau et ces impuretés volatiles sont évaporés.

4. Procédé suivant l'une quelconque des revendications 1 à 3, caractérisé en ce qu'il consiste en outre (f) à filtrer le premier filtrat à travers un filtre à vide revêtu d'un adjuvant de filtration, récupérant ainsi des oligomères du sulfure d'aryléne sur celui-ci et à faire passer à travers celui-ci un second filtrat comprenant un halogénure de métal alcalin aqueux.

5. Procédé suivant l'une quelconque des Revendications 1 à 4, caractérisé en ce que ce poly(sulfure d'arylène) est le poly(sulfure de phénylène), en ce que ce solvant organique polaire est la N-méthyl-2-pyrrolidone (NMP) et en ce que cet halogénure de métal alcalin est NaCl.

6. Procédé suivant l'une des Revendications précédentes, caractérisé en ce que ce liquide est l'eau.

7. Procédé suivant l'une quelconque des Revendications 1 à 3, caractérisé en ce que le mélange remis en bouillie de d) est traité (1) en laissant se déposer ce poly(sulfure d'arylène) granulaire et (2) en éliminant au moins une partie de l'eau contenant de l'halogénure de métal alcalin extrait et des oligomères du poly(sulfure d'arylène) avant de le tamiser.

8. Procédé suivant les Revendications 1, 3 ou 4, caractérisé en ce qu'au cours du stade d'évaporation a), on fait passer un courant de gaz inerte A travers cette bouillie.

9. Procédé de la Revendication 8, caractérisé en ce que le gaz est choisi parmi l'air et l'azote.

10. Utilisation du poly(sulfure d'arylène) granulaire récupéré, obtenu suivant l'une quelconque des Revendications 1 à 9, pour fabriquer des articles manufacturés; ces articles étant choisis en particulier parmi des films, des feuilles, des fibres, des objets moulés et des articles extrudés.

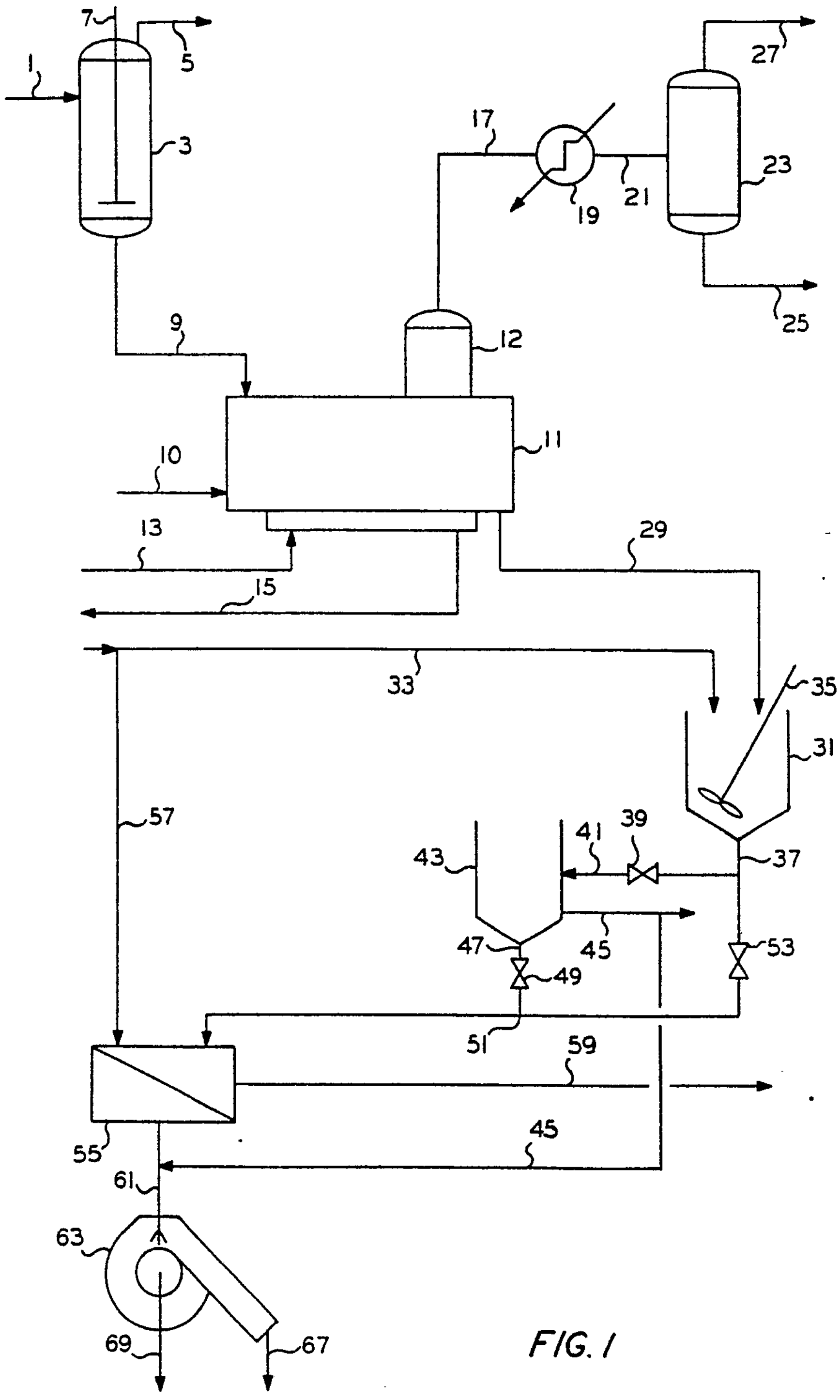
7
5
1
3
17
19
21
27
23
25
9
12
11
10
13
15
29
33
35
31
57
43
41
39
37
47
45
49
53
51
59
55
45
61
63
69
67

FIG. 1